# EUROPÄISCHE PATENTSCHRIFT

(11) **EP 1 135 284 B1**
(45) Veröffentlichungstag und Bekanntmachung des Hinweises auf die Patenterteilung: **14.05.2003**
(21) Anmeldenummer: 99962093.3
(22) Anmeldetag: 29.11.1999
(51) Int. Cl.: B60R 25/02, B60R 25/04

(54) **SCHLIESSYSTEM, INSBESONDERE FÜR KRAFTFAHRZEUGE**
LOCKING SYSTEM, ESPECIALLY FOR MOTOR VEHICLES
SYSTEME DE FERMETURE, NOTAMMENT POUR AUTOMOBILES

(30) Priorität: 01.12.1998 DE 19855342
(43) Veröffentlichungstag der Anmeldung: 26.09.2001
(73) Patentinhaber: Marquardt GmbH, 78604 Rietheim-Weilheim (DE)
(72) Erfinder: GEIGER, August, D-78607 Talheim (DE); MÜLLER, Karl, D-78628 Rottweil-Neufra (DE); GEBER, Michael, D-72574 Bad Urach (DE); FITZ, Hartmut, D-73660 Urbach (DE)
(74) Vertreter: Patentanwälte Eisele, Otten & Roth
(86) Internationale Anmeldenummer: DE9903773
(87) Internationale Veröffentlichungsnummer: WO00032452

(56) Entgegenhaltungen:
- WO-A-95/09746
- DE-A- 19 520 211
- GB-A- 2 169 651
- US-A- 4 837 567

## Beschreibung

Die Erfindung betrifft ein elektronisches Schloß nach dem Oberbegriff des Patentanspruchs 1.

Ein derartiges elektronisches Schloß wird in Kraftfahrzeugen als elektronisches Zündschloß zum Betrieb eines zugehörigen Betriebsaggregats, wie einer Motorsteuerung, einer Wegfahrsperre o. dgl. verwendet.

Aus der gattungsbildenden WO 95/09746 ist ein Schließsystem für ein Kraftfahrzeug bekannt, das aus einem elektronischen Schloß und einem zugehörigen elektronischen Schlüssel besteht. Das Schloß besitzt eine Aufnahme, in die der Schlüssel einführbar ist. Im Schloß befindet sich ein lediglich schematisch angedeutetes Schaltelement, das durch die Bewegung des Schlüssels beim Einführen in die Aufnahme betätigbar ist. Die Betätigung des Schaltelements, dessen Schaltsignal als "Schlüssel-steckt"-Signal interpretierbar ist, schaltet dann den bestiminungsgemäßen Betrieb von Schlüssel und Schloß ein, wobei der in der Aufnahme befindliche Schlüssel mit dem Schloß wenigstens ein codiertes Betriebssignal austauscht. Nach positiver Auswertung des übertragenen Betriebssignals, d.h. wenn es sich um den berechtigten Schlüssel handelt, ist die Freigabe des Schlosses zur Bewegung der Aufnahme durch den Schlüssel in wenigstens eine Betätigungsstellung auslösbar. In der Betätigungsstellung erfolgt dann die Inbetriebnahme des Betriebsaggregats.

Aus Sicherheitsgründen ist die Fehlerfreiheit des bestimmungsgemäßen Betriebs von Schlüssel und Schloß erforderlich. Hierzu ist es notwendig, eine fehlerunanfällige Betätigung des Schaltelements bei Einführen des Schlüssels in die Aufnahme sicherzustellen. Eine Anregung ist hierzu aus der WO 95/09746 nicht zu entnehmen, da dort das Schaltelement lediglich rein schematisch zu sehen ist.

Weiter hat es sich gezeigt, daß Betriebszustände des Schlosses auftreten können, in denen das Schloß freigegeben ist, obwohl der Schlüssel nicht oder nicht vollständig in der Aufnahme eingeführt ist. In einem solchen Betriebszustand kann die Aufnahme in die Betätigungsstellung bewegt werden. Insbesondere ist bei Entnahme des Schlüssels aus der Aufnahme eine Manipulation des Schaltelementes und damit des "Schlüssel-steckt"-Signals nicht ausgeschlossen. Wie unmittelbar ersichtlich ist, ist dadurch die Diebstahlsicherheit vermindert.

In der EP-A1-0 464 278 ist ein Schloß beschrieben, das einen mittels magnetischen Stößeln als Zuhaltungen verriegelbaren Rotor aufweist. In eine Aufnahme des Rotors ist ein Schlüssel einführbar, wobei der Bart des Schlüssels mit mehreren Magnetelementen versehen ist. Handelt es sich um den zum Schloß zugehörigen Schlüssel, so korrespondieren die Magnetelemente zu den Stößeln, so daß aufgrund der einwirkenden Magnetkraft die Stößel sich zur Freigabe der Bewegung des Rotors verstellen. Gleichzeitig betätigen die Stößel bei deren Verstellung unmitelbar zugehörige Schaltelemente, die wiederum einen Stromkreis im Kraftfahrzeug freigeben.

Bei diesem Schloß werden zwar die Zuhaltungen magnetisch bewegt, ansonsten funktioniert es jedoch im wesentlichen wie ein herkömmliches mechanisches Schloß. Die Sicherheit eines elektronischen Schlosses, bei dem ein codiertes Betriebssignal mit dem Schlüssel zur Freigabe ausgetauscht wird, wird hier somit nicht erreicht. Weiter ist nachteilig, daß der magnetische Stößel unmittelbar auf das Schaltelement einwirkt. Zum einen sind dadurch die Anordnungsmöglichkeiten des Schaltelementes im Schloß eingeschränkt. Zum anderen ist die Sicherheit vor Manipulation des Schaltelementes ebenfalls nicht gewährleistet. Weitergehende Anregungen für die Ausgestaltung eines elektronischen Schlosses vermittelt folglich die EP-A1-0 464 278 nicht.

Der Erfindung liegt ausgehend von der WO 95/09746 die Aufgabe zugrunde, das Schloß mit einer fehlerunanfälligen, sicheren Betätigung für das Schaltelement zu versehen.

Diese Aufgabe wird bei einem gattungsgemäßen elektronischen Schloß durch die kennzeichnenden Merkmale des Anspruchs 1 gelöst.

Das Schloß besitzt ein weiteres Sperrelement, das eine Verstellbewegung bei Einführen des Schlüssels in die Aufnahme und/oder Entnahme des Schlüssels ausführt. Dabei wirkt das Sperrelement derart mit der Aufnahme zusammen, daß die Bewegung der Aufnahme zusätzlich zu deren Freigabe lediglich bei korrekt in der Aufnahme befindlichem Schlüssel ermöglicht ist. Ein im Hinblick auf das Sperrelement separates Übertragungsmittel für die Verstellbewegung des Sperrelementes ist einerseits mit dem Sperrelement und andererseits mit dem Schaltelement in Wirkverbindung bringbar. Aufgrund der Verstellbewegung des Sperrelementes wirkt das Übertragungsmittel schaltend auf das Schaltelement ein. Weitere Ausgestaltungen der Erfindung sind Gegenstand der Unteransprüche.

Das Sperrelement kann in der Art eines mechanischen Sperrschiebers ausgebildet sein. Dieser Sperrschieber ist an der Aufnahme und/oder im unmittelbaren Bereich der Aufnahme bewegbar gelagert und durch den Schlüssel in oder außer Wirkverbindung mit einer Nut im Gehäuse des Schlosses zur zusätzlichen Sperrung oder Freigabe der Bewegung der Aufnahme bringbar. Bevorzugt ist die Ausbildung des Sperrschiebers als ein federbelastetes, gegenläufiges Schieberpaar, wodurch eine im wesentlichen symmetrische Krafteinwirkung durch den Sperrschieber gewährleistet ist. Nochmals ein weiterer zusätzlicher Sperrschieber kann in der Betätigungsstellung der Aufnahme derart in Wirkverbindung mit dem elektronischen Schlüssel stehen, daß ein Entfernen des Schlüssels aus der Aufnahme verhindert ist.

Es bietet sich an, das Sperrelement mit einer Federkraft in Richtung auf die Nut im Gehäuse des Schlosses zu beaufschlagen. Dadurch ragt das Sperrelement bei außerhalb der Aufnahme oder bei nicht korrekt in der Aufnahme befindlichem Schlüssel in die Nut zur Sperrung der Bewegung der Aufnahme hinein. Befindet sich andererseits der Schlüssel korrekt in der Aufnahme, so ist das Sperrelement vom Schlüssel außerhalb der Nut festgehalten, wodurch diese Sperrung der Bewegung der Aufnahme aufgehoben ist. Zweckmäßigerweise dient ein Ansatz am Gehäuse des Schlüssels, um die Verstellbewegung und/oder das Festhalten des Sperrelementes zu bewirken.

In einer Weiterbildung der Erfindung besteht das Übertragungsmittel aus einem zwischen dem Sperrelement und dem Schaltelement angeordneten Hebel. Das Sperrelement wirkt auf ein Ende des Hebels ein, und zwar bevorzugterweise mittels eines Nockens, so daß der Hebel durch die Verstellbewegung des Sperrelements bewegbar ist. Zweckmäßigerweise ist hierzu die Nut innerhalb des Gehäuses im Schloß im Bereich des Nockens als Durchbruch ausgestaltet, so daß das eine Ende des Hebels an der dem Sperrelement gegenüberliegenden Seite der Nut in die Nut hineinragt. Das andere Ende des Hebels wirkt auf das Betätigungsorgan des Schaltelements ein, so daß der Hebel bei der Verstellbewegung des Sperrelementes das Betätigungsorgan zur schaltenden Einwirkung auf das Schaltelement bewegt.

In weiterer Ausgestaltung besteht das Schaltelement aus einem elektrischen Schalter, und zwar insbesondere aus einem in der Art eines Öffners ausgebildeten Tastschalter. Das Schaltelement kann mit einem in sich gekapselten Gehäuse versehen sein, womit eine hohe Zuverlässigkeit des Schlosses auch unter rauhen Betriebsbedingungen erzielt wird. Das Schaltelement kann je nach Erfordernis auf einer beabstandet zur Aufnahme angeordneten Leiterplatte befestigt sein. Zweckmäßigerweise ist das Schaltelement in der Art eines SMD(Surface Mounted Device)-Bauteils ausgebildet, so daß das Schaltelement mit seinen Anschlüssen in SMD-Technik auf der Leiterplatte befestigbar ist.

In einer Weiterbildung, die eine Bedienung wie bei einem herkömmlichen Zündschloß gestattet, ist die Aufnahme als ein durch den Schlüssel rotativ und/oder translativ bewegbares Element ausgestaltet. Bevorzugterweise handelt es sich bei diesem Element um einen drehbaren Rotor, wobei eine Drehsperre in und außer Zusammenwirken mit dem Rotor zur Sperrung oder Freigabe des Rotors bringbar ist. Der freigegebene Rotor wirkt bei einer Drehung in die Betätigungsstellung mit weiteren, in unmittelbarer Nähe des Rotors befindlichen Schaltelementen in der Art eines Lastschalters zusammen. Das Sperrelement zur zusätzlichen Sperrung bzw. Freigabe der Bewegung des Rotors ist dann am und/oder im Rotor bewegbar gelagert.

Die mit der Erfindung erzielten Vorteile bestehen insbesondere darin, daß die Funktions- und Diebstahlsicherheit für das ein erfindungsgemäßes Schloß verwendende Kraftfahrzeug erhöht ist. Insbesondere ist die Manipulation des Schaltelementes und damit auch des "Schlüssel-steckt"-Signals bei Entnahme des Schlüssels aus der Aufnahme erschwert. Die Anordnung zur Betätigung des Schaltelementes ist fehlerunanfällig. Gegenüber bisherigen Zündschlössern ergibt sich eine zuverlässigere Rückstellung des Schaltelementes bei Entnahme des Schlüssels aus der Aufnahme, womit auch eine sichere Auslösung der Lenkradverriegelung gewährleistet ist. Als Schaltelement kann eine SMD-Taste eingesetzt werden, die ein gekapseltes Schaltsystem besitzt. Ein schädliches Eindringen von Fremdstoffen in das Schaltelement ist selbst unter rauhen Betriebsbedingungen dann nicht zu befürchten. Die erfindungsgemäße Anordnung ist sehr ausfallsicher sowie zudem einfach und kostengünstig zu realisieren.

Ein Ausführungsbeispiel der Erfindung mit verschiedenen Weiterbildungen ist in den Zeichnungen dargestellt und wird im folgenden näher beschrieben. Es zeigen
- Fig. 1: schematisch eine Funktionsübersicht eines Schließsystems in einem Kraftfahrzeug,
- Fig. 2: einen Längsschnitt durch das Schloß aus Fig. 1,
- Fig. 3: das Schloß in vergrößerter Darstellung aus Richtung III in Fig. 2 gesehen, wobei Teile des Gehäuses für das Schloß der Übersichtlichkeit halber weggelassen sind,
- Fig. 4: den Bereich der Aufnahme des Schlosses wie in Fig. 2, wobei der Schlüssel nicht in der Aufnahme befindlich ist,
- Fig. 5: einen Schnitt entlang der Linie 5-5 in Fig. 4, wobei der Schlüssel nicht in der Aufnahme befindlich ist,
- Fig. 6: den Bereich der Aufnahme des Schlosses wie in Fig. 2, wobei der Schlüssel in der Aufnahme befindlich ist,
- Fig. 7: einen Schnitt wie in Fig. 5, wobei der Schlüssel in der Aufnahme befindlich ist, und
- Fig. 8: ein Einzelteil des Schlosses in perspektivischer Darstellung.

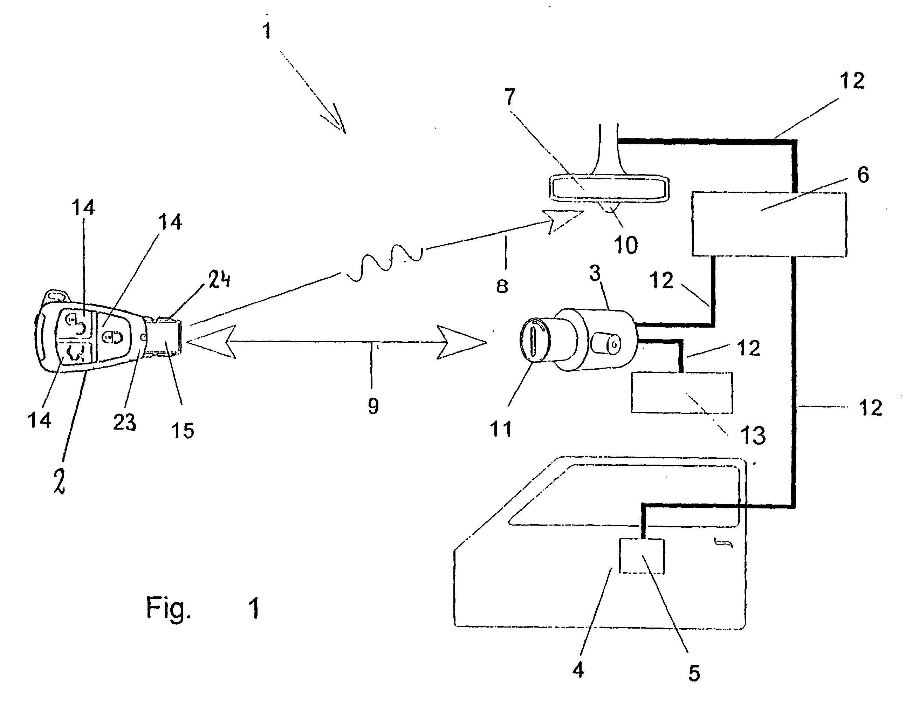

In Fig. 1 ist ein für ein Kraftfahrzeug bestimmtes Schließsystem 1 schematisch gemäß einem Teil seiner Funktionen gezeigt. Das Schließsystem 1 besteht aus einem elektronischen Schloß 3 und zwar aus einem elektronischen Zündschloß sowie einem zugehörigen elektronischen Schlüssel 2. Das Schloß 3 steht mit einem zugehörigen Betriebsaggregat 13, wie beispielsweise einer Motorsteuerung, einer elektronischen Wegfahrsperre o. dgl. des Kraftfahrzeugs, über ein Bussystem 12, wie den bekannten CAN-Bus, in Verbindung.

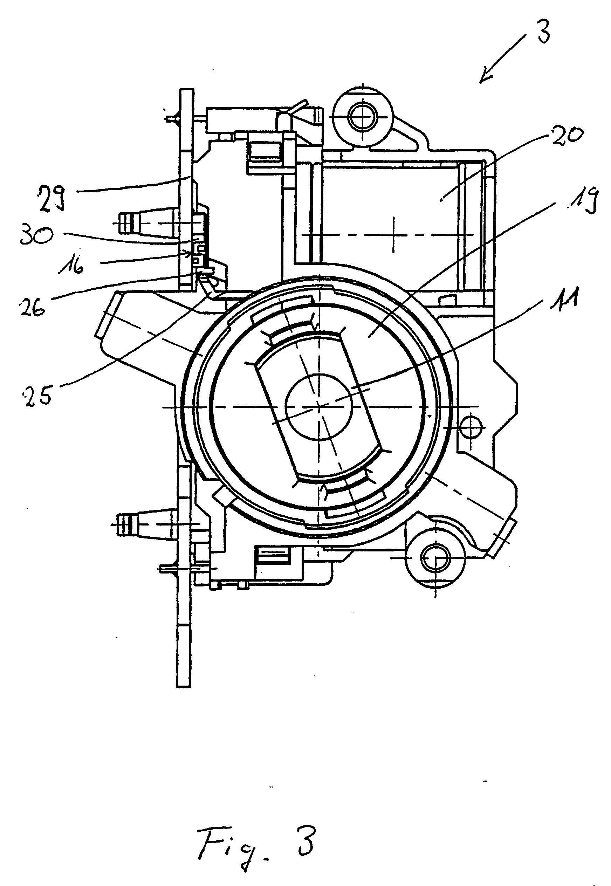

Zur Inbetriebnahme des Kraftfahrzeugs, beispielsweise zum Starten des Motors des Kraftfahrzeugs, wird der Schlüssel 2 mit seinem Frontteil 15 in eine Aufnahme 11 des gesperrten Schlosses 3 eingeführt. Diese Bewegung zur Einführung des Schlüssels 2 wird auf ein im Schloß 3 befindliches, in Fig. 3 sichtbares Schaltelement 16 übertragen, so daß das Schaltelement 16 betätigt wird und ein Signal erzeugt. Es handelt sich bei diesem Schaltelement 16 um den sogenannten "Schlüssel-steckt"-Schalter, der durch das Einführen des Schlüssels 2 in die Aufnahme 11 betätigt wird und dabei das sogenannte "Schlüssel-steckt"-Signal erzeugt. Das "Schlüsselsteckt"-Signal bewirkt, daß das Schloß 3 in einen Bereitschaftszustand übergeht, und eine induktive Energieübertragung vom Schloß 3 auf den Schlüssel 2 einschaltet, so daß die für den bestimmungsgemäßen Betrieb des Schlüssels 2 benötigte Energie vom Schloß 3 geliefert wird.

Im Bereitschaftszustand des Schlosses 3 tauscht dann der in der Aufnahme 11 befindliche Schlüssel 2 mit dem Schloß 3 wenigstens ein codiertes Betriebssignal 9 aus, wobei es sich beispielsweise um Infrarotsignale handeln kann. Bevorzugterweise erfolgt dabei eine bidirektionale Codeübertragung zwischen dem Schlüssel 2 und dem Schloß 3. Nach positiver Auswertung des übertragenen Betriebssignals 9 ist die Freigabe für das Schloß 3 auslösbar. Beim gesperrten Schloß 3, das sich in einer Ausgangsstellung befindet, kann lediglich das Einführen des Schlüssels 2 in die Aufnahme 11 vorgenommen werden, während beim freigegebenen Schloß 3 eine weitere Bewegung des Schlüssels 2 im Schloß 3 ermöglicht ist. Das Betriebsaggregat 13 kann dann über das Schloß 3 in Betrieb genommen werden, indem die Aufnahme 11 durch den Schlüssel 2 in wenigstens eine Betätigungsstellung bewegt wird und zwar bevorzugterweise aus der Ausgangsstellung des Schlosses 3 um einen bestimmten Winkel in die Betätigungsstellung gedreht wird.

Zur Beendigung des Betriebs des Betriebsaggregats 13, beispielsweise zum Abstellen des Motors des Kraftfahrzeugs, wird der Schlüssel 2 wiederum von der Betätigungsstellung in die Ausgangsstellung des Schlosses 3 zurückbewegt und danach in der Regel der Schlüssel 2 aus der Aufnahme 11 entfernt. Nach Erreichen der Ausgangsstellung ist die Sperrung des Schlosses 3 für die weitere Bewegung des Schlüssels 2 im Schloß 3 auslösbar. Gegebenenfalls kann die Auslösung der Sperrung auch erst durch das fehlende "Schlüssel-steckt"-Signal beim Entfernen des Schlüssels 2 aus dem Schloß 3 erfolgen. Weiter wird dabei das Schloß 3 zur Energieeinsparung vom Bereitschaftszustand in einen Schlafzustand mit eingeschränkter Funktionalität und verringerter Stromaufnahme versetzt. Eine erneute Inbetriebnahme des Kraftfahrzeugs läuft durch Einstecken des Schlüssels 2 in das Schloß 3 wie oben geschildert ab.

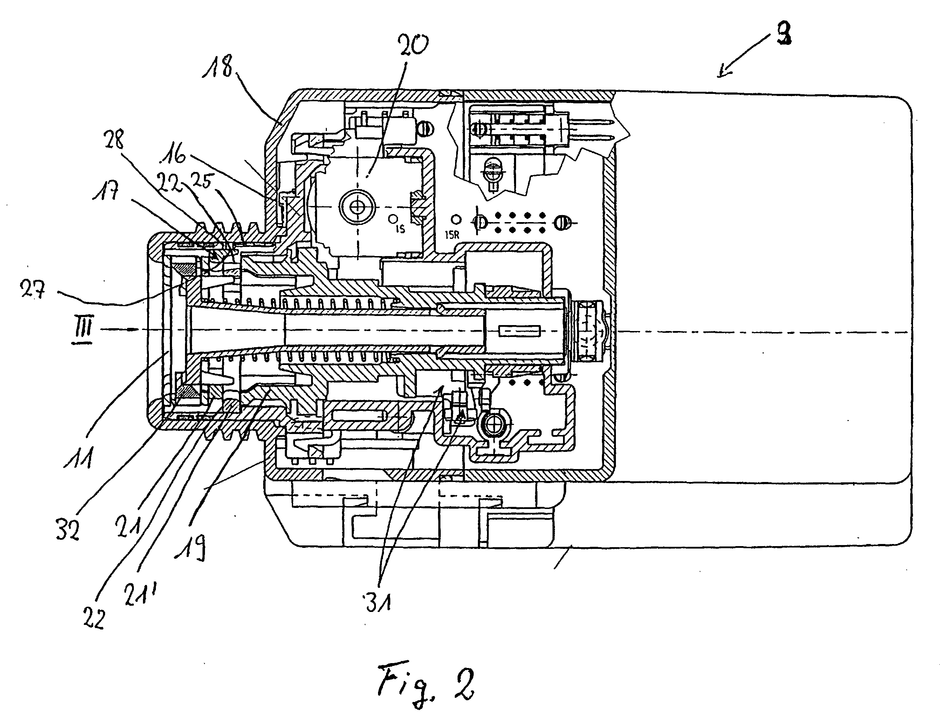

Zur Erhöhung der Sicherheit vor unbefugter Inbetriebnahme des Betriebsaggregats 13 ist im Schloß 3 ein mechanisches Sperrelement 17 angeordnet, wie näher aus Fig. 2 hervorgeht. Das Sperrelement 17 führt eine Verstellbewegung bei Einführen des Schlüssels 2 in die Aufnahme 11 und/oder bei Entnahme des Schlüssels 2 aus der Aufnahme 11 aus. Dabei wirkt das Sperrelement 17 derart mit der Aufnahme 11 zusammen, daß zusätzlich zu der vom Betriebssignal 9 ausgelösten Freigabe die Bewegung der Aufnahme 11 lediglich bei korrekt in der Aufnahme 11 befindlichem Schlüssel 2 ermöglicht ist. Ein weiteres zusätzliches Übertragungsmittel 25 für die Verstellbewegung des Sperrelementes 17, das im Hinblick auf das Sperrelement 17 separat ausgebildet ist, ist einerseits mit dem Sperrelement 17 und andererseits mit dem Schaltelement 16 in Wirkverbindung bringbar. Die Verstellbewegung des Sperrelementes 17 wirkt dadurch über das Übertragungsmittel 25 schaltend auf das Schaltelement 16 ein. Insbesondere wird beim Einführen des Schlüssels 2 in die Aufnahme 11 das Schaltelement 16 eingeschaltet und gibt dabei das "Schlüssel-steckt"-Signal ab. Bei der Entnahme des Schlüssels 2 aus der Aufnahme 11 wird das Schaltelement 16 ausgeschaltet, womit das "Schlüssel-steckt"-Signal entfällt.

Zusätzlich kann der Schlüssel 2 für die Ansteuerung weiterer Funktionen verwendet werden, wie anhand der Fig. 1 ersichtlich ist. Mit Hilfe des elektronischen Schlüssels 2 läßt sich das Schließsystem 1 zur Zugangsberechtigung fernbedienbar ansteuern, im vorliegenden Fall lassen sich die Autotüren 4 des Kraftfahrzeugs fernbedienbar bis zu einer gewissen maximalen Entfernung vom Kraftfahrzeug ver- und entriegeln.

Für die Ansteuerung dieser weiteren Funktionen ist zwischen dem Schlüssel 2 und einer zentral im Kraftfahrzeug, beispielsweise am Innenspiegel 7, angeordneten Empfangs- und Sendeeinrichtung 10 für das Schließsystem 1 ein codiertes Betriebssignal 8 übertragbar. Als Betriebssignal 8 für den Schlüssel 2 werden in der Regel elektromagnetische Signale, wie Hf-Signale und/oder Infrarot-Signale o. dgl., verwendet. Die Übertragung des Betriebssignals 8 ist mittels am Gehäuse des Schlüssels 2 befindlicher Betätigungsorgane 14 durch den Benutzer auslosbar. Das übertragene Betriebssignal 8 wird einer im Kraftfahrzeug befindlichen Signalverarbeitungseinrichtung 6 zugeführt und nach positiver Auswertung des Betriebssignals 8, d.h. falls es sich um den berechtigten Schlüssel 2 handelt, wird ein beispielsweise in der jeweiligen Autotüre 4 befindliches Steuergerät 5, das mit der Signalverarbeitungseinrichtung 6 über das Bussystem 12 in Verbindung steht, zur Ver- oder Entriegeluung der Autotüren 4 betätigt. Bei dem Steuergerät 5 kann es sich zum Beispiel um eine an sich bekannte Zentralverriegelung handeln.

Die nähere Ausgestaltung des in Fig. 1 lediglich schematisch gezeigten elektronischen Schlosses 3 als ein elektronisches Zündschloß für ein Kraftfahrzeug ist in verschiedenen Weiterbildungen der Erfindung in den Fig. 2 und 3 zu sehen.

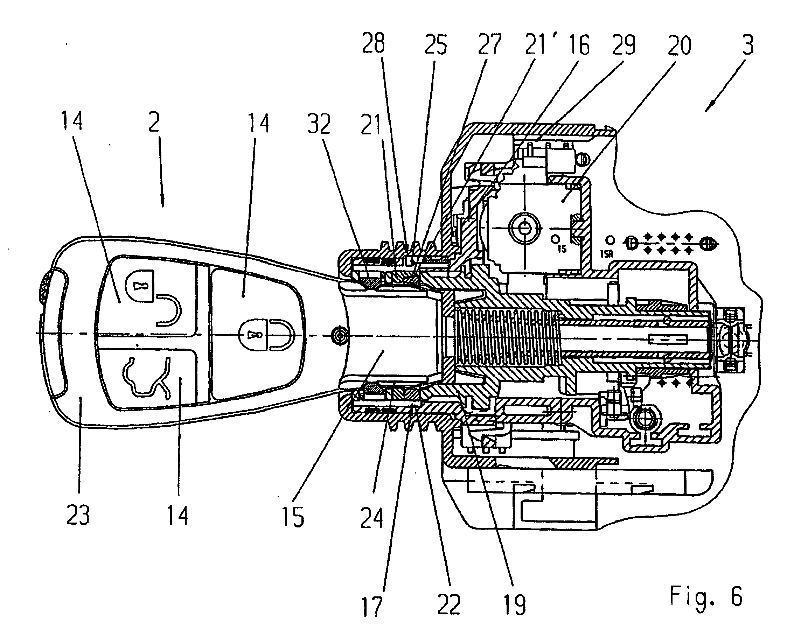

Das Schloß 3 besitzt ein Gehäuse 18, das beispielsweise am Armaturenbrett des Kraftfahrzeugs angebracht ist. Für den Nutzer ist die Aufnahme 11, die am Frontteil des Gehäuses 18 befindlich ist, zur Einführung des Schlüssels 2 zugänglich. Der in der Aufnahme 11 befindliche Schlüssel 2 steht in direkter Wirkverbindung mit einem Rotor 19, wie auch Fig. 6 zu entnehmen ist, wobei das Sperrelement 17 am und/oder im Rotor 19 bewegbar gelagert ist. Eine in der Art einer elektromagnetischen Sperre ausgebildete Drehsperre 20 ist in oder außer Zusammenwirkung mit dem Rotor 19 bringbar, wodurch die Sperrung oder Freigabe des Schlosses 3 bewirkbar ist. Der freigegebene Rotor 19 wirkt bei einer Drehung in die Betätigungsstellung mit weiteren, in unmittelbarer Nähe des Rotors 19 befindlichen, lediglich schematisch angedeuteten Schaltelementen 31 beispielsweise über eine Nockensteuerung zusammen. Die Schaltelemente 31 dienen als eine Art von Lastschalter zum Schalten verschiedener Stromkreise im Kraftfahrzeug. Anstelle eines rotativ bewegbaren Elements kann die Aufnahme 11 auch als translativ bewegbares Element ausgebildet sein, was jedoch in den Zeichnungen nicht weiter gezeigt ist.

Im Bereich der Aufnahme 11 kann sich im Gehäuse 18 ein zusätzlicher Sperrschieber 32 befinden. Der Sperrschieber 32 steht in der Betätigungsstellung der Aufnahme 11 derart in Wirkverbindung mit dem elektronischen Schlüssel 2, daß ein Entfernen des Schlüssels 2 aus der Aufnahme 11 verhindert ist. Um den Schlüssel 2 aus der Aufnahme 11 entnehmen zu können, muß der Rotor 19 zunächst in die Ausgangsstellung zur Außerbetriebnahme des Betriebsaggregats 13 zurückgedreht werden.

Im Gehäuse 18 des Schlosses 3 befindet sich beabstandet zur Aufnahme 11 eine Leiterplatte 29 für die elektrischen und/oder elektronischen Bauelemente des Schlosses 3, wie in Fig. 3 gezeigt ist. Es bietet sich an, das Schaltelement 16 auf der Leiterplatte 29 zu befestigen, wobei der Abstand bis zur Leiterplatte 29 vom Übertragungselement 25 überbrückt ist. Das Schaltelement 16 besteht aus einem elektrischen Schalter und zwar vorliegend aus einem in der Art eines Öffners ausgebildeten Tastschalter. Weiter ist das Schaltelement 16 mit einem in sich gekapselten Gehäuse 30 versehen. Bevorzugterweise ist das Schaltelement 16 in der Art eines SMD(Surface Mounted Device)-Bauteils ausgebildet, so daß das Schaltelement 16 mit seinen Anschlüssen in SMD-Technik auf der Leiterplatte 29 befestigbar ist.

Wie näher aus Fig. 2 hervorgeht, kann das Sperrelement 17 in der Art eines mechanischen Sperrschiebers 21 ausgebildet sein, der bewegbar an der Aufnahme 11 gelagert ist. Gegebenenfalls kann der Sperrschieber 21 auch im unmittelbaren Bereich der Aufnahme 11 bewegbar gelagert sein. Zur Erhöhung der Sicherheit kann ein weiterer Sperrschieber 21' spiegelbildlich zum Sperrschieber 21 an der Aufnahme 11 angeordnet sein, so daß das Sperrelement 17 aus einem gegenläufigen Schieberpaar 21, 21' besteht. Durch den Schlüssel 2 ist der Sperrschieber 21, 21' in oder außer Wirkverbindung mit einer Nut 22 im Gehäuse 18 des Schlosses 3 zur zusätzlichen Sperrung oder Freigabe der Bewegung der Aufnahme 11 bringbar.

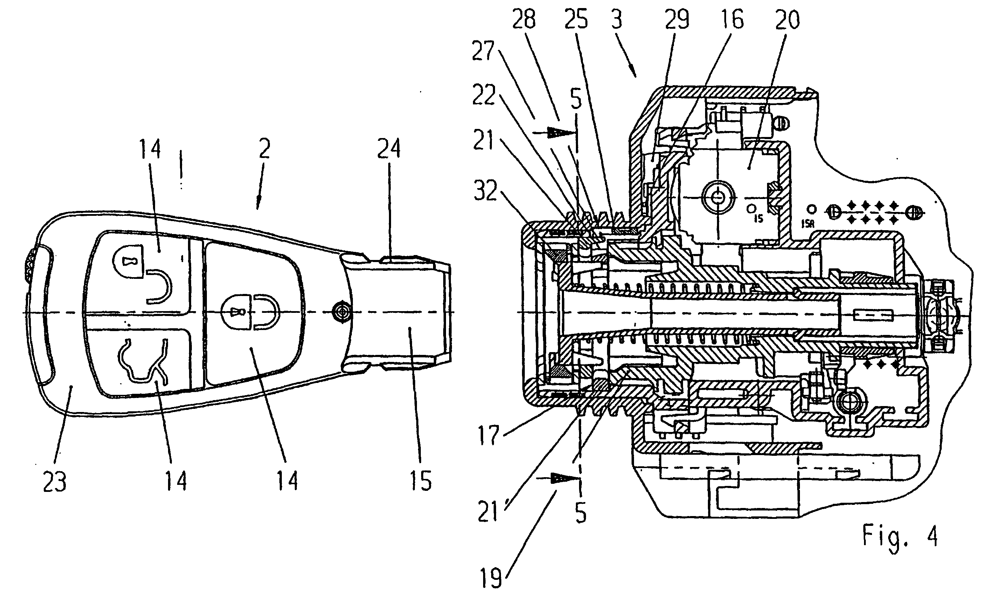

Zweckmäßigerweise ist der Sperrschieber 21 bzw. das Schieberpaar 21, 21' mit einer elastischen Kraft, die von einer nicht weiter gezeigten Feder erzeugt werden kann, in Richtung auf die Nut 22 im Gehäuse 18 des Schlosses 3 beaufschlagt. Aufgrund dieser Kraft ragt einerseits der Sperrschieber 21, 21' bei nicht korrekt in der Aufnahme 11 befindlichem Schlüssel 2 in die Nut 22 hinein. Anderseits ist der Sperrschieber 21, 21' bei korrekt in der Aufnahme 11 befindlichem Schlüssel 2 vom Schlüssel 2 außerhalb der Nut 22 entgegen der Kraft festgehalten. Hierzu wirkt ein Ansatz 24 am Gehäuse 23 des Schlüssels 2 auf den Sperrschieber 21, 21' zu dessen Verstellbewegung sowie zu dessen Festhalten ein, was näher aus Fig. 4 und 6 hervorgeht.

Das zwischen dem Sperrelement 17 und dem Schaltelement 16 befindliche Übertragungsmittel 25, das zur Übertragung der Verstellbewegung des Sperrelementes 17 auf das Schaltelement 16 dient, ist in näherer Ausgestaltung in Fig. 4 bis 7 zu sehen.

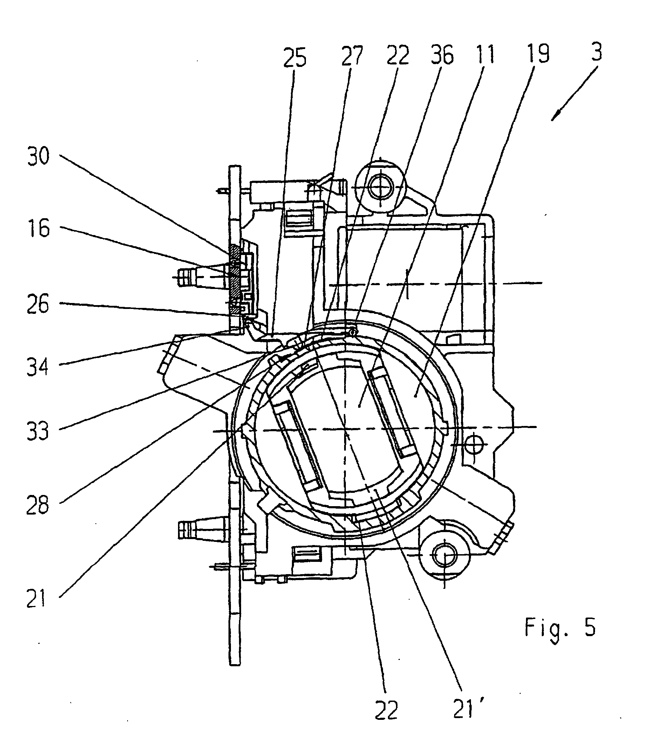

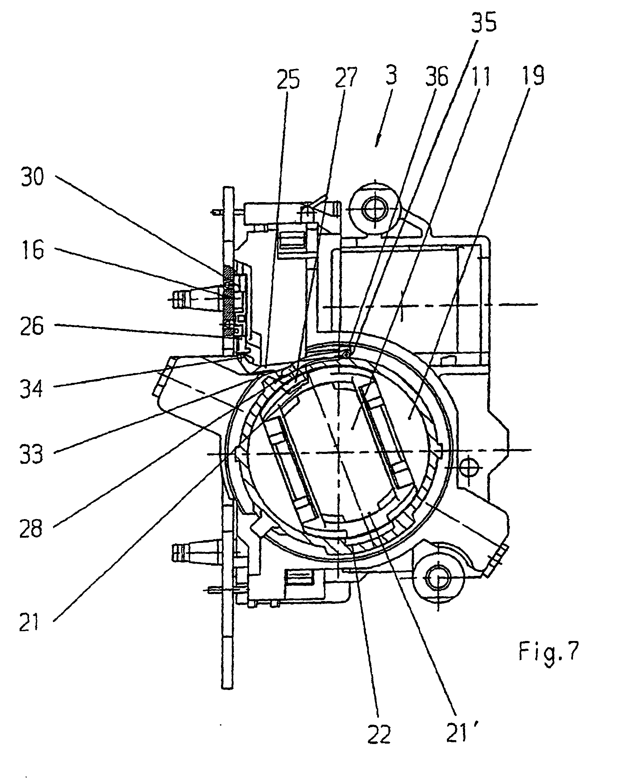

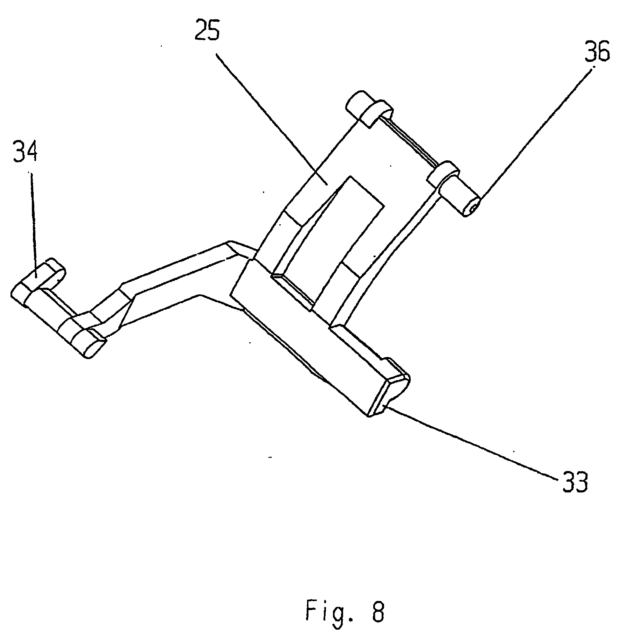

Das Übertragungsmittel 25 besteht in bevorzugter Ausgestaltung aus einem zwischen dem Sperrelement 17 und dem Schaltelement 16 angeordneten Hebel, der in Fig. 8 als Einzelteil in perspektivischer Ansicht gezeigt ist. Das Sperrelement 17 wirkt auf ein Ende 33 des Hebels 25 ein, so daß der Hebel 25 durch die Verstellbewegung des Sperrelementes 17 bewegbar ist. Das andere Ende 34 des Hebels 25 wirkt seinerseits auf das Betätigungsorgan 26 des Schaltelements 16 ein, so daß der Hebel 25 bei Verstellbewegung des Sperrelementes 17 das Betätigungsorgan 26 zur schaltenden Einwirkung auf das Schaltelement 16 bewegt und/oder freigibt. Der Hebel 25 ist mittels einer Achse 36 drehbar an einer Lagerstelle 35 unabhängig von der Aufnahme 11 im Schloß 3 gelagert, was anhand von Fig. 5 oder 7 zu erkennen ist.

Wie weiter aus Fig. 5 und 7 hervorgeht, befindet sich ein Nocken 27 am Sperrschieber 21, insbesondere an einem der beiden Sperrschieber des Schieberpaars 21, 21', wobei der Nocken 27 auf das eine Ende 33 des Hebels 25 einwirkt. Die Nut 22 innerhalb des Gehäuses 18 im Schloß 3 ist im Bereich des Nockens 27 als Durchbruch 28 ausgestaltet, so daß das eine Ende 33 des Hebels 25 an der dem Sperrschieber 21 gegenüberliegenden Seite der Nut 22 in die Nut 22 hineinragt.

In Fig. 4 und 5 ist die Stellung des Hebels 25 zu sehen, bei der sich der Schlüssel 2 nicht in der Aufnahme 11 des Schlosses 3 befindet. Bei dieser Stellung ist das Betätigungsorgan 26 des Schaltelements 16 betätigt und durch das Ende 34 des Hebels 25 festgehalten. Somit ist das Kontaktsystem des als Öffner ausgebildeten Schaltelements 16 geöffnet, so daß das Schaltelement 16 daher kein "Schlüsselsteckt"-Signal abgibt. In Fig. 6 und 7 ist die andere Stellung des Hebels 25 zu sehen, bei der sich der Schlüssel 2 korrekt in der Aufnahme 11 des Schlosses 3 befindet. Hier ist nun das Betätigungsorgan 26 des Schaltelements 16 vom Ende 34 des Hebels 25 freigegeben und daher unbetätigt. Somit ist das Kontaktsystem des als Öffner ausgebildeten Schaltelements 16 geschlossen, so daß das Schaltelement 16 das "Schlüsselsteckt"-Signal abgibt.

Die Erfindung ist nicht auf das beschriebene und dargestellte Ausführungsbeispiel beschränkt. So kann die Erfindung nicht nur an Zündschlössern o. dgl. für Kraftfahrzeuge eingesetzt werden, sondern kann auch an elektronischen Schlössern von sonstigen Schließsystemen, wie an Türen in Gebäuden usw., Verwendung finden.

### Bezugszeichen-Liste:

- 1:: Schließsystem
- 2:: elektronischer Schlüssel
- 3:: elektronisches Schloß
- 4:: Autotüre
- 5:: Steuergerät
- 6:: Signalverarbeitungseinrichtung
- 7:: Innenspiegel
- 8:: Betriebssignal (für Autotür)
- 9:: Betriebssignal (für Schloß)
- 10:: Empfangs- und Sendeeinrichtung
- 11:: Aufnahme (am Schloß)
- 12:: Bussystem
- 13:: Betriebsaggregat
- 14:: Betätigungsorgan (am Schlüssel)
- 15:: Frontteil (des Schlüssels)
- 16:: Schaltelement ("Schlüssel-steckt"-Schalter)
- 17:: Sperrelement
- 18:: Gehäuse (von Schloß)
- 19:: Rotor
- 20:: Drehsperre
- 21,21':: Sperrschieber / Schieberpaar
- 22:: Nut
- 23:: Gehäuse (von Schlüssel)
- 24:: Ansatz (an Gehäuse von Schlüssel)
- 25:: Übertragungsmittel / Hebel
- 26:: Betätigungsorgan
- 27:: Nocken
- 28:: Durchbruch
- 29:: Leiterplatte
- 30:: Gehäuse (von Schaltelement)
- 31:: Schaltelement (von Lastschalter)
- 32:: zusätzlicher Sperrschieber
- 33,34:: Ende (von Hebel)
- 35:: Lagerstelle
- 36:: Achse (von Hebel)

## Patentansprüche

1. Elektronisches Schloß für ein Schließsystem (1), insbesondere elektronisches Zündschloß für ein Kraftfahrzeug, mit einer Aufnahme (11), in die ein zugehöriger elektronischer Schlüssel (2) einführbar ist, und mit einem Schaltelement (16), das durch Einführen des Schlüssels (2) in die Aufnahme (11) betätigbar ist und dabei ein Signal erzeugt, wobei der in der Aufnahme (11) befindliche Schlüssel (2) mit dem Schloß (3) wenigstens ein codiertes Betriebssignal (9) austauscht, so daß nach positiver Auswertung des übertragenen Betriebssignals (9) die Freigabe des Schlosses (3) zur Bewegung der Aufnahme (11) durch den Schlüssel (2) in wenigstens eine Betätigungsstellung auslösbar ist, **dadurch gekennzeichnet, daß** ein Sperrelement (17), das eine Verstellbewegung bei Einführen des Schlüssels (2) in die Aufnahme (11) und/oder Entnahme des Schlüssels (2) aus der Aufnahme (11) ausführt, derart mit der Aufnahme (11) zusammenwirkt, daß die Bewegung der Aufnahme (11) zusätzlich zu deren Freigabe lediglich bei korrekt in der Aufnahme (11) befindlichem Schlüssel (2) ermöglicht ist, daß ein separates Übertragungsmittel (25) für die Verstellbewegung des Sperrelementes (17) einerseits mit dem Sperrelement (17) und andererseits mit dem Schaltelement (16) in Wirkverbindung bringbar ist, und daß das Übertragungsmittel (25) aufgrund der Verstellbewegung des Sperrelementes (17) schaltend auf das Schaltelement (16) einwirkt.

2. Elektronisches Schloß nach Anspruch 1, **dadurch gekennzeichnet, daß** das Sperrelement (17) in der Art eines mechanischen Sperrschiebers (21) ausgebildet ist.

3. Elektronisches Schloß nach Anspruch 1 oder 2, **dadurch gekennzeichnet, daß** der Sperrschieber (21) an der Aufnahme (11) und/oder im unmittelbaren Bereich der Aufnahme (11) bewegbar gelagert ist.

4. Elektronisches Schloß nach Anspruch 1, 2 oder 3, **dadurch gekennzeichnet, daß** der Sperrschieber (21) durch den Schlüssel (2) in oder außer Wirkverbindung mit einer Nut (22) im Gehäuse (18) des Schlosses (3) zur zusätzlichen Sperrung oder Freigabe der Bewegung der Aufnahme (11) bringbar ist.

5. Elektronisches Schloß nach einem der Ansprüche 1 bis 4, **dadurch gekennzeichnet, daß** das Sperrelement (17) mit einer Kraft, insbesondere einer Federkraft in Richtung auf die Nut (22) im Gehäuse (18) des Schlosses (3) beaufschlagt ist, derart daß das Sperrelement (17) bei außerhalb der Aufnahme (11) oder bei nicht korrekt in der Aufnahme (11) befindlichem Schlüssel (2) in die Nut (22) hineinragt, und daß das Sperrelement (17) bei korrekt in der Aufnahme (11) befindlichem Schlüssel (2) vom Schlüssel (2) außerhalb der Nut (22) festgehalten ist.

6. Elektronisches Schloß nach einem der Ansprüche 1 bis 5, **dadurch gekennzeichnet, daß** ein Ansatz (24) am Gehäuse (23) des Schlüssels (2) auf das Sperrelement (17) zu dessen Verstellbewegung und/oder zu dessen Festhalten einwirkt.

7. Elektronisches Schloß nach einem der Ansprüche 1 bis 6, **dadurch gekennzeichnet, daß** das Übertragungsmittel (25) aus einem zwischen dem Sperrelement (17) und dem Schaltelement (16) angeordneten Hebel besteht, wobei das Sperrelement (17) auf ein Ende (33) des Hebels (25) einwirkt, so daß der Hebel (25) durch Verstellbewegung des Sperrelements (17) bewegbar ist, und daß das andere Ende (34) des Hebels (25) auf das Betätigungsorgan (26) des Schaltelements (16) einwirkt, so daß der Hebel (25) bei der Verstellbewegung des Sperrelementes (17) das Betätigungsorgan (26) zur schaltenden Einwirkung auf das Schaltelement (16) bewegt.

8. Elektronisches Schloß nach einem der Ansprüche 1 bis 7, **dadurch gekennzeichnet, daß** das Sperrelement (17) als federbelastetes, gegenläufiges Schieberpaar (21, 21') ausgebildet ist.

9. Elektronisches Schloß nach einem der Ansprüche 1 bis 8, **dadurch gekennzeichnet, daß** ein Nocken (27) am Sperrschieber (21), insbesondere an einem Sperrschieber (21) des Schieberpaars (21, 21'), auf das eine Ende (33) des Hebels (25) einwirkt

10. Elektronisches Schloß nach einem der Ansprüche 1 bis 9, **dadurch gekennzeichnet, daß** die Nut (22) innerhalb des Gehäuses (18) im Schloß (3) im Bereich des Nockens (27) als Durchbruch (28) ausgestaltet ist, so daß das eine Ende (33) des Hebels (25) an der dem Sperrelement (17) gegenüberliegenden Seite der Nut (22) in die Nut (22) hineinragt.

11. Elektronisches Schloß nach einem der Ansprüche 1 bis 10, **dadurch gekennzeichnet, daß** das Schaltelement (16) aus einem elektrischen Schalter, insbesondere aus einem in der Art eines Öffners ausgebildeten Tastschalter, besteht.

12. Elektronisches Schloß nach einem der Ansprüche 1 bis 11, **dadurch gekennzeichnet, daß** das Schaltelement (16) mit einem in sich gekapselten Gehäuse (30) versehen ist.

13. Elektronisches Schloß nach einem der Ansprüche 1 bis 12, **dadurch gekennzeichnet, daß** das Schaltelement (16) auf einer beabstandet zur Aufnahme (11) angeordneten Leiterplatte (29) befestigt ist, wobei das Schaltelement (16) in der Art eines SMD-Bauteils ausgebildet ist, so daß das Schaltelement (16) mit seinen Anschlüssen in SMD-Technik auf der Leiterplatte (29) befestigbar ist.

14. Elektronisches Schloß nach einem der Ansprüche 1 bis 13, **dadurch gekennzeichnet, daß** die Aufnahme (11) als ein durch den Schlüssel (2) rotativ und/oder translativ bewegbares Element ausgebildet ist, insbesondere als drehbarer Rotor (19), wobei eine Drehsperre (20) in und außer Zusammenwirken mit dem Rotor (19) zur Sperrung oder Freigabe des Rotors (19) bringbar ist.

15. Elektronisches Schloß nach einem der Ansprüche 1 bis 14, **dadurch gekennzeichnet, daß** der freigegebene Rotor (19) bei einer Drehung in die Betätigungsstellung mit weiteren, in unmittelbarer Nähe des Rotors (19) befindlichen Schaltelementen (31) in der Art eines Lastschalters beispielsweise über eine Nockensteuerung zusammenwirkt.

16. Elektronisches Schloß nach einem der Ansprüche 1 bis 15, **dadurch gekennzeichnet, daß** das Sperrelement (17) am und/oder im Rotor (19) bewegbar gelagert ist.

17. Elektronisches Schloß nach einem der Ansprüche 1 bis 16, **dadurch gekennzeichnet, daß** ein zusätzlicher Sperrschieber (32) in der Betätigungsstellung der Aufnahme (11) derart in Wirkverbindung mit dem elektronischen Schlüssel (2) steht, daß ein Entfernen des Schlüssels (2) aus der Aufnahme (11) verhindert ist.

## Claims

1. Electronic lock for a locking system (1), in particular an electronic ignition lock for a motor vehicle, with a receiver (11), into which an appropriate electronic key (2) can be inserted, and with a switching element (16) which can be actuated by insertion of the key (2) into the receiver (11) and in the process generates a signal, the key (2) located in the receiver (11) exchanging at least one coded operating signal (9) with the lock (3), so after positive evaluation of the transmitted operating signal (9), the release of the lock (3) can be triggered to move the receiver (11) by means of the key (2) into at least one actuating position, **characterised in that** a locking element (17) which carries out an adjusting movement during insertion of the key (2) into the receiver (11) and/or removal of the key (2) from the receiver (11) interacts with the receiver (11) in such a way that the movement of the receiver (11), in addition to the release thereof, is only enabled when the key (2) is correctly located in the receiver (11), **in that** a separate transmission means (25) for the adjusting movement of the locking element (17) can be brought into working contact, on the one hand, with the locking element (17) and, on the other hand, with the switching element (16), and **in that** the transmission means (25) acts in a switching manner on the switching element (16) owing to the adjusting movement of the locking element (17).

2. Electronic lock according to claim 1, **characterised in that** the locking element (17) is formed in the manner of a mechanical locking slide (21).

3. Electronic lock according to claim 1 or 2, **characterised in that** the locking slide (21) is movably mounted on the receiver (11) and/or in the immediate region of the receiver (11).

4. Electronic lock according to claim 1, 2 or 3, **characterised in that** the locking slide (21) can be brought by the key (2) in or out of working contact with a groove (22) in the housing (18) of the lock (3) for additional locking or release of the movement of the receiver (11).

5. Electronic lock according to any one of claims 1 to 4, **characterised in that** the locking element (17) is loaded with a force, in particular a spring force, in the direction of the groove (22) in the housing (18) of the lock (3), in such a way that the locking element (17) projects into the groove (22) when the key (2) is located outside the receiver (11) or is not located correctly in the receiver (11), and **in that** the locking element (17) is held outside the groove (22) by the key (2) when the key (2) is located correctly in the receiver (11).

6. Electronic lock according to any one of claims 1 to 5, **characterised in that** a shoulder (24) on the housing (23) of the key (2) acts on the locking element (17) for the adjusting movement thereof and/or holding thereof.

7. Electronic lock according to any one of claims 1 to 6, **characterised in that** the transmission means (25) consists of a lever arranged between the locking element (17) and the switching element (16), the locking element (17) acting on one end (33) of the lever (25), so the lever (25) can be moved by the adjusting movement of the locking element (17), and **in that** the other end (34) of the lever (25) acts on the actuating member (26) of the switching element (16), so the lever (25) moves the actuating member (26) for the switching effect on the switching element (16) during the adjusting movement of the locking element (17).

8. Electronic lock according to any one of claims 1 to 7, **characterised in that** the locking element (17) is formed as a spring-loaded, pair of slides (21, 21') running in opposing directions.

9. Electronic lock according to any one of claims 1 to 8, **characterised in that** a cam (27) on the locking slide (21), in particular on a locking slide (21) of the pair of slides (21, 21'), acts on the one end (33) of the lever (25).

10. Electronic lock according to any one of claims 1 to 9, **characterised in that** the groove (22) is formed as an opening (28) inside the housing (18) in the lock (3) in the region of the cam (27), so one end (33) of the lever (25) projects into the groove (22) on the side of the groove (22) opposing the locking element (17).

11. Electronic lock according to any one of claims 1 to 10, **characterised in that** the switching element (16) consists of an electric switch, in particular of a momentary-contact switch formed in the manner of an opener.

12. Electronic lock according to any one of claims 1 to 11, **characterised in that** the switching element (16) is provided with a self-enclosed housing (30).

13. Electronic lock according to any one of claims 1 to 12, **characterised in that** the switching element (16) is fastened on a printed-circuit board (29) arranged spaced from the receiver (11), the switching element (16) being formed in the manner of an SMD component, so the switching element (16) with its terminals can be fastened using SMD technology on the printed-circuit board (29).

14. Electronic lock according to any one of claims 1 to 13, **characterised in that** the receiver (11) is formed as an element which can be moved in a rotative and/or translative manner by the key (2), in particular as a rotatable rotor (19), wherein a rotary lock (20) can be brought in and out of working contact with the rotor (19) to lock or release the rotor (19).

15. Electronic lock according to any one of claims 1 to 14, **characterised in that** the released rotor (19) interacts in the manner of a load interrupter switch, for example via a cam control, with further switching elements (31) located in the direct vicinity of the rotor (19) during a rotation into the actuating position.

16. Electronic lock according to any one of claims 1 to 15, **characterised in that** the locking element (17) is movably mounted on and/or in the rotor (19).

17. Electronic lock according to any one of claims 1 to 16, **characterised in that** an additional locking slide (32) in the actuating position of the receiver (11) is in working contact with the electronic key (2) in such a way that removal of the key (2) from the receiver (11) is prevented.

## Revendications

1. Serrure électronique pour un système de fermeture (1), en particulier serrure de contact électronique pour un véhicule automobile, comportant un récepteur (11), dans lequel peut être introduite une clef électronique correspondante (2), et un élément de commutation (16), qui peut être actionné par introduction de la clef (2) dans le récepteur (11) et engendre de plus un signal, la clef (2) se trouvant dans le récepteur (11) échangeant avec la serrure (3) au moins un signal de fonctionnement codé (9), de sorte que, après évaluation positive du signal de fonctionnement transmis (9), la libération de la serrure (3) pour déplacer le récepteur (11) par la clef (2) dans au moins une position d'actionnement peut être déclenchée,
**caractérisée en ce qu'**un élément d'arrêt (17), qui effectue un mouvement de réglage lors de l'introduction de la clef (2) dans le récepteur (11) et/ou du retrait de la clef (2) du récepteur (11), coopère avec le récepteur (11), de sorte que le déplacement du récepteur (11) de façon supplémentaire à sa libération est permis uniquement lorsque la clef (2) se trouve correctement dans le récepteur (11), **en ce qu'**un moyen de transmission séparé (25) pour le mouvement de réglage de l'élément d'arrêt (17) peut être amené en liaison active, d'une part, avec l'élément d'arrêt (17) et, d'autre part, avec l'élément de commutation (16), et **en ce que** le moyen de transmission (25) agit sur l'élément de commutation (16) en le commutant en raison du mouvement de réglage de l'élément d'arrêt (17).

2. Serrure électronique selon la revendication 1,
**caractérisée en ce que** l'élément d'arrêt (17) est réalisé à la manière d'un coulisseau d'arrêt mécanique (21).

3. Serrure électronique selon la revendication 1 ou 2,
**caractérisée en ce que** le coulisseau d'arrêt (21) est monté de façon déplaçable sur le récepteur (11) et/ou dans la zone à proximité directe du récepteur (11).

4. Serrure électronique selon la revendication 1, 2 ou 3,
**caractérisée en ce que** le coulisseau d'arrêt (21) peut être amené en liaison active ou hors de liaison active par la clef (2) avec une rainure (22) dans le boîtier (18) de la serrure (3) pour l'arrêt ou la libération supplémentaire du déplacement du récepteur (11).

5. Serrure électronique selon une des revendications 1 à 4,
**caractérisée en ce que** l'élément d'arrêt (17) est sollicité par une force, en particulier une force élastique, en direction de la rainure (22) dans le boîtier (18) de la serrure (3), de sorte que l'élément d'arrêt (17), lorsque la clef (2) se trouve à l'extérieur du récepteur (11) ou ne se trouve pas correctement dans le récepteur (11), pénètre dans la rainure (22), et que l'élément d'arrêt (17), lorsque la clef (2) se trouve correctement dans le récepteur (11), est maintenu à l'extérieur de la rainure (22) par la clef (2).

6. Serrure électronique selon une des revendications 1 à 5,
**caractérisée en ce qu'**une pièce rapportée (24) sur le boîtier (23) de la clef (2) agit sur l'élément d'arrêt (17) pour son mouvement de réglage et/ou son maintien.

7. Serrure électronique selon une des revendications 1 à 6,
**caractérisée en ce que** le moyen de transmission (25) est constitué d'un levier agencé entre l'élément d'arrêt (17) et l'élément de commutation (16), l'élément d'arrêt (17) agissant sur une extrémité (33) du levier (25), de sorte que le levier (25) peut être déplacé par le mouvement de réglage de l'élément d'arrêt (17), et **en ce que** l'autre extrémité (34) du levier (25) agit sur l'organe d'actionnement (26) de l'élément de commutation (16), de sorte que le levier (25), lors du mouvement de réglage de l'élément d'arrêt (17), déplace l'organe d'actionnement (26) pour agir sur l'élément de commutation (16) pour commuter celui-ci.

8. Serrure électronique selon une des revendications 1 à 7,
**caractérisée en ce que** l'élément d'arrêt (17) est réalisé comme paire de coulisseaux (21, 21') opposés, chargés par ressort.

9. Serrure électronique selon une des revendications 1 à 8,
**caractérisée en ce qu'**une saillie (27) sur le coulisseau d'arrêt (21), en particulier sur un coulisseau d'arrêt (21) de la paire de coulisseaux (21, 21'), agit sur l'extrémité (33) du levier (25).

10. Serrure électronique selon une des revendications 1 à 9,
**caractérisée en ce que** la rainure (22) à l'intérieur du boîtier (18) dans la serrure (3), dans la zone de la saillie (27), est réalisée comme ouverture (28), de sorte que l'extrémité (33) du levier (25), sur le côté de la rainure (22) opposé à l'élément d'arrêt (17), pénètre dans la rainure (22).

11. Serrure électronique selon une des revendications 1 à 10,
**caractérisée en ce que** l'élément de commutation (16) est constitué d'un commutateur électrique, en particulier d'un commutateur à action fugitive réalisé à la manière d'un contact de rupture.

12. Serrure électronique selon une des revendications 1 à 11,
**caractérisée en ce que** l'élément de commutation (16) est muni d'un boîtier (30) encapsulé.

13. Serrure électronique selon une des revendications 1 à 12,
**caractérisée en ce que** l'élément de commutation (16) est fixé sur une plaquette conductrice (29) agencée de façon écartée par rapport au récepteur (11), l'élément de commutation (16) étant réalisé à la manière d'une pièce SMD, de sorte que l'élément de commutation (16) peut être fixé par ses raccords suivant la technique SMD sur la plaquette conductrice (29).

14. Serrure électronique selon une des revendications 1 à 13,
**caractérisée en ce que** le récepteur (11) est réalisé comme un élément déplaçable en rotation et/ou en translation par la clef (2), en particulier comme rotor rotatif (19), un moyen d'arrêt en rotation (20) pouvant coopérer ou non avec le rotor (19) pour arrêter ou libérer le rotor (19).

15. Serrure électronique selon une des revendications 1 à 14,
**caractérisée en ce que** le rotor libéré (19) lors d'une rotation dans la position d'actionnement coopère avec d'autres éléments de commutation (31) se trouvant à proximité directe du rotor (19) à la manière d'un commutateur en charge, par exemple par l'intermédiaire d'une commande à came.

16. Serrure électronique selon une des revendications 1 à 15,
**caractérisée en ce que** l'élément d'arrêt (17) est monté de façon déplaçable sur et/ou dans le rotor (19).

17. Serrure électronique selon une des revendications 1 à 16,
**caractérisée en ce qu'**un coulisseau d'arrêt supplémentaire (32), dans la position d'actionnement du récepteur (11), se trouve en liaison active avec la clef électronique (2), de sorte qu'un retrait de la clef (2) du récepteur (11) est empêché.
